# EUROPEAN PATENT APPLICATION

(11) **EP 1 469 679 A1**
(43) Date of publication of application: **20.10.2004**
(21) Application number: 03017966.7
(22) Date of filing: 06.08.2003
(51) Int. Cl.: H04N 7/173

(54) **Use-related billing for Pay TV**

(30) Priority: 03.09.2002 US 233644
(71) Applicant: Weinblatt, Lee S., Teaneck, New Jersey 07666 (US)
(72) Inventor: Weinblatt, Lee S., Teaneck, NJ 07666 (US); Langer, Thomas, Teaneck, NJ 07666 (US)
(74) Representative: Epping Hermann & Fischer

(57) **Abstract**

Technique for billing viewers for use of pay TV based on duration of viewing rather than a flat fee. A code signal is broadcast together with a programming signal. The encoded programming signal is received while a viewer is tuned to a selected program and decoded to derive a code therefrom which is used for determining a duration of time during which the viewer was tuned to that program. The thusly determined duration of time is combined with a designated billing rate to derive a use-based billed amount.

## Description

### FIELD OF THE INVENTION

This invention is directed to a technique for billing viewers who subscribe to a pay TV service and, more particularly, to bill such viewers based on actual use of the service rather than a monthly subscription fee.

### BACKGROUND OF THE INVENTION

The term "program" as used herein can be a commercial type (e.g. advertisement) and/or a non-commercial type (e.g. an entertainment show), and it involves a programming signal (e.g. a television signal) obtained from a program signal source (e.g. a television station), originated by a program provider (e.g. a television network, an advertiser, or a production company) and reproduced as audio and/or video. The "broadcast" of the program can be over the airwaves, cable, satellite, or any other signal transmission medium. An "audience" for such program reproduction is constituted of the persons who perceive the program.

The program is "performed" by any reproduction equipment which results in some form that is perceptible to human beings, the most common being video and audio. The "reproduction equipment" is any and all types of units to convert a broadcast signal into human perceptible form.

The audience can be described as being "tuned" to a specific program signal source, such as a television ("TV") or radio broadcast station. The word "tuned" is applied herein to all situations in which a person chooses to be an audience member of a program or programs being broadcast by that specific program signal source, such as by twisting a dial or operating a remote control device of a TV, for example, in order to set that TV so it can receive and perform the programs from that source. For purposes of convenience, the discussion presented below will involve TV, and the members of the audience will be referred to as viewers.

Pay TV, transmitted by cable or satellite, has come into widespread usage. The pay TV service provider (such as a cable company or a satellite company) transmits a digital signal (although analog service is still available, it is being gradually superceded by digital service everywhere) for programs on numerous channels. The signals for those channels that require payment are scrambled. A decoder box is installed at the viewer's location, typically a private house. If the viewer subscribes to pay TV, a signal is sent from the pay TV service provider, typically over a phone line, to the decoder box, to unscramble the channel or channels included in the subscription.

The payment for access to such pay TV is a flat monthly subscription fee for basic service. An additional flat monthly fee is applied for premium service, namely certain popular channels. An alternative form of payment requires the viewers to place a phone call to the pay TV service provider when a specific program is about to be broadcast, such as a boxing event. A charge is applied for that program and the decoder box is enabled, or released, to decode the scrambled signal and reproduce that particular program.

Each of these forms of payment has certain shortcomings. For example, expensive decoder boxes are required, and each TV in a household requires its own box with its own wiring throughout the house. This is costly to the pay TV service provider in terms of having to provide and install the boxes. Installing these boxes and their wiring throughout the house is also a source of inconvenience, expense and even irritation (e.g. due to unsightly paint damage) to the homeowner. Such boxes may need to be replaced, or at least modified, when new channels or new pay TV services are added, thereby creating further expense and inconvenience. Also, unauthorized ("pirate") boxes are available for purchase that can circumvent the decoder boxes provided by the pay TV service provider to avoid having to pay a fee to the pay TV service provider. Moreover, the flexibility of using a VCR with a decoder box is limited because the VCR must always be set to channel 3 or 4, with channel selection being made via the box. Thus, recording on multiple channels can only be done if a "premium", more expensive, decoder box is obtained. Furthermore, and as far as the audience is concerned, a viewer who watches basic services for only a few hours per month may feel that it is uneconomical to pay the same amount. i.e the flat monthly subscription fee, as someone who is tuned to such service 'round the clock. Likewise, a viewer who is likely to want to see perhaps only one movie per month is not interested in subscribing to a service which bills him the same amount as a viewer who watches one or more movies per day. As a result, such low-use viewers may choose not to subscribe to the basic and/or premium services at all because of the perception that they receive insufficient value for their money. As regards the pay-per-program method, many viewers find it inconvenient and annoying to have to place a call to obtain access. Their own phone may be in use at the time, the service provider's line may be busy, placing the call takes up time and requires effort, and so on. Thus, an improved use-based billing technique is required.

### SUMMARY OF THE INVENTION

One object of the present invention is to provide an improved use-based billing technique for pay TV.

Another object of the present invention is to provide a convenient, reliable and inexpensive use-based pay TV billing technique.

A further object of the present invention is to eliminate the need for decoder boxes to access pay TV services.

Yet another object of the present invention is to provide a use-based pay TV billing technique that enables it to be combined with audience monitoring.

One other object of the present invention is to provide a use-based pay TV billing technique that enables the pay TV service provider to provide discounts and other incentives based on the amount of use by viewers of its pay TV services.

These and other objects are attained in accordance with one aspect of the present invention directed to a method and apparatus for billing viewers for viewing programs offered by pay TV, comprising encoding a programming signal, to be broadcast by a program signal source, with a code signal, and broadcasting the encoded programming signal. The encoded programming signal is detected at a viewer location as a result of the viewer being tuned to programs offered by pay TV. The encoded programming signal is decoded to derive the code signal therefrom. A duration of time during which the viewer was tuned to programs offered by pay TV is determined from the decoded code signal, and the determined duration of time is combined with a designated billing rate corresponding to the decoded code signal to derive a use-based billed amount.

Another aspect of the present invention is directed to a method and apparatus for providing discounts on use-based bills to viewers of pay TV. A programming signal that has been encoded with a code signal is broadcast. The encoded programming signal is detected at a viewer location as a result of the viewer being tuned to programs offered by pay TV. The encoded programming signal is decoded to derive the code signal therefrom. From the decoded code signal, a duration of time is determined during which the viewer was tuned to programs offered by pay TV in order to derive therefrom a use-based billed amount. A use-based discount is provided to the viewer for pay TV services.

A further aspect of the present invention is directed to a method and apparatus for providing audience monitoring information based on data obtained to generate use-based bills to viewers of pay TV. A programming signal that has been encoded with a code signal comprising at least one code respectively associated with pay TV programs or program signal sources is broadcast. The encoded programming signal is detected at a viewer location and as a result of the viewer being tuned to programs offered by pay TV. The encoded programming signal is decoded to derive the code signal therefrom. A use-based billed amount for pay TV services is determined from the decoded code signal, and, from the at least one code in the decoded code signal, determining the pay TV programs to which the viewer was tuned.

### BRIEF DESCRIPTION OF THE DRAWINGS

Fig. 1 is a schematic block diagram depicting transmission, reception and decoding of an encoded pay TV signal in accordance with the invention.
Fig. 2 is a schematic block diagram depicting processing of a code derived from the pay TV signal to bill viewers of pay TV in accordance with the invention.
Fig. 3 is a schematic block diagram depicting details of the premium service counter shown in the block diagram of FIG. 2.

### DETAILED DESCRIPTION OF THE DRAWINGS

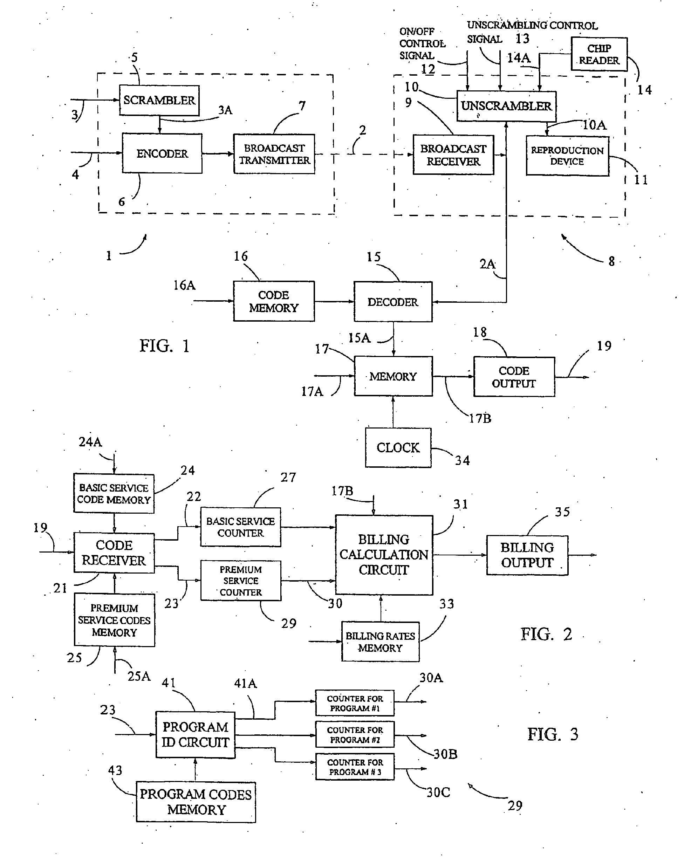

The present invention relies on the following key components. As shown in Fig. 1, a program signal source 1, such as a pay TV service provider's broadcast station, generates a broadcast output signal 2 which is a combination of a programming signal 3 and a code signal 4. The code signal includes specific codes each of which can be uniquely assigned to a basic service, a premium channel, or for a particular program. The conventional programming signal 3 is scrambled by a scrambler 5 to produce scrambled programming signal 3A. For those channels that are free, no scrambling is performed and signal 3A is identical to signal 3. As is well known, scrambled programming signal 3A is not reproducible by the TV at the viewer's end unless it is unscrambled with an appropriate key signal. The scrambling prevents the viewer from watching the program unless that key has been provided, and the key is provided by the pay TV service provider only if the viewer has properly subscribed to the pay TV service.

Output signal 3A of the scrambler 5 is encoded by encoder 6 with a code signal 4. The term "encoded" is used in the broadest sense to include any and all techniques for combining a programming signal with other signals for broadcasting them together by a well known, commonly used broadcast transmitter 7.

Broadcast output signal 2 is received at the viewer's end by program reproduction apparatus 8 which is capable of unscrambling and performing the programming signal, such as in video and/or audio, typically at the viewer's home. Broadcast receiver 9 of apparatus 8 processes the received programming signal 2 and inputs signal 2A to unscrambler 10 which provides its output signal 10A to reproduction device 11. Thus, if apparatus 8 is a TV set, receiver 9 could be a tuner, and device 11 is the TV screen and its related circuitry and components. Signal 10A is the unscrambled version of received signal 2A suitable for perceptible display on device 11 if unscrambler 10 is provided with the proper unscrambling control signal, or key, 13. Otherwise, device 11 will display a picture that is substantially not human perceptible. Unscrambler 10 receives an ON/OFF control signal 12 and the unscrambling control signal 13. Signal 12 is used as a "gatekeeper" so that all unscrambling can be blocked to a non-paying customer. In particular, unscrambler circuit 10 can include a toggle circuit (not shown) or any other ON/OFF switch that controls the unscrambler. When signal 12 is ON, the unscrambler is enabled. When an OFF signal is provided, the unscrambler 10 is disabled. A possible variation is to disable only a specific key via signal 13 (see below).

Unscrambling control signal 13 can include several different keys. For example, a different key can be provided for basic service, different levels of premium service, and even for some specific programs. Unscrambler circuit 10 includes a memory (not shown) for storing each key.

Signals 12 and 13 can be provided to unscrambler circuit 10 in any one of several ways. For example, they can be transmitted via phone line, cable or radio. Also, the keys can be pre-stored in the unscrambler during manufacture, and signal 13 can be an activation signal for a specific one of such pre-stored keys rather than the key itself. One other way is to use a chip reader 14. With this approach, the pay TV service provider would give the viewer some form of memory device (not shown), such as a smart card, magnetic stripe card, Smart Media card, or the like. These are all referred to generically herein as a "chip". The chip would be inserted into reader 14 which retrieves the information on the chip and inputs it to unscrambler 10 as signal 14A.

It must be understood that a modern TV tuner can tune to, say, 181 channels. However, with use of a decoder box, the TV's tuner is always set to channel 3 or 4. The decoder box's tuner is then used to change channels for pay TV subscribers. However, one object of the present invention is to build-in the unscrambler into the TV, and to rely on the TV's tuner, even for pay TV, thus eliminating the need for a decoder box with all of its above-described shortcomings. One hurdle in doing so is that each pay TV service provider can choose to put a particular premium service on any channel. Thus, provider A can put the Disney channel on channel 30, while provider B can choose to put it on channel 35. Therefore, a TV cannot be manufactured and set at the factory to have its unscrambler operate with the premium service channel settings of all the service providers. However, with the present invention it is easy to cope with this situation. Each particular pay TV service provider can conveniently provide all of its channel selections and corresponding codes in the form of data stored on a chip that can be inserted into chip reader 14, for example. Of course, as an alternative this feature is also available by suitable selection of signal 13, as explained above.

The reproduction apparatus 8 also provides output signal 2A for use in generating use-based pay TV billing, as explained below.

The specific broadcasting and encoding techniques chosen depend on various design considerations. The code signals can be either analog or digital. The code is of any well known type, but it must lend itself well to being combined with the programming signal, processed for broadcast, broadcast, received and processed again to be accurately decoded. Also, the codes are to be used to calculate the duration of a viewing period. Thus, they occur with a given frequency, such as one per second, and a count of 60 codes represents one minute of viewing time. Of course, the mention of this number is arbitrary and it is specified only by way of example. Due to design considerations, in actuality it can be significantly lower or higher. The encoding, transmission, detection and decoding of such data signals are conventional and readily apparent to anyone with ordinary skill in the art. Such specifics do not form a part of the present invention. Details thereof would add unnecessarily to the length and complexity of this description. Consequently, such details are not provided herein.

The output signal 2A from broadcast receiver 9 is inputted to decoder 15. Code memory 16 has its output also inputted to decoder 15. All the pay TV billing codes that are expected to be broadcast by transmitter 1 are pre-stored in code memory 16, such as via input 16A, in any one of several well known ways (for example, via a suitable wire or wireless communications link such as a telephone line, ISDN line or cable, or a wireless communication system can be used, such as satellite or cellular). Decoder 15 compares signal 2A with the codes stored in code memory 16. When a match is found, the resulting code is provided on output 15A and stored in memory 17. The codes stored in memory 17 are retrieved in response to a control signal at input 17A and outputted by code output circuit 18 as a signal on output 19. The signal on input 17A can be generated automatically, locally or remotely, or manually, when it is desirable to retrieve the stored data. A date/time signal from clock 34 can also be stored in memory 17 in association with each code signal as it occurs so that, as an additional capability of this arrangement, viewership can be determined with respect to time (as explained below).

Signal 15A obtained from broadcast signal 2 via receiver 9 can be identical to the code signal 4, or it can be a minimally changed version thereof (e.g., amplified), or it can be a substantially changed version, depending on the specific signals and the encoding/decoding technique chosen and based on well known design considerations.

Up to this point, the invention has been described in terms of collecting data in the form of detected codes embedded in the broadcast signal which are collected as a direct result of the specific channels selected,or tuned to, by the viewer and/or the duration of access by the viewer to a particular pay TV service. That data is stored in memory 17. What is done with that data for billing purposes will now be explained.

As shown in Fig. 2, after retrieval of the codes from memory 17 is triggered by signal 17A, the code signal on output 19 is inputted to code receiver circuit 21. The code receiver also receives the outputs of basic service code memory 24 and premium service codes memory 25. Stored in memory 24, such as via input 24A, is the basic service code. Likewise, memory 25 stores the premium service code, if only a single one is being used, or a plurality of such codes, as explained below. These are stored in memory 25, such as via input 25A.

Code receiver 21 compares the received pay TV codes on output 19 with the codes stored in memories 24 and 25. If code receiver 21 identifies a match with the basic service code, a signal, such as a pulse, is generated on output 22 which is provided to basic service counter 27. The count in counter 27 is incremented by one each time code receiver 21 generates a signal on output 22. Likewise, code receiver 21 generates a signal on output 23 when a match is determined with any code stored in memory 25. The signal on output 23 increments the count in premium service counter 29.

If all the premium programs are assigned one code, then counter 29 would need to be only a single counter, as is counter 27. However, the invention can also be applied advantageously to the use of multiple premium service codes. Rather than having only one category of premium service for all premium programs, two categories, for example, can be used with a different fee being applied for each category. Thus, all sporting events could be coded with one premium service code, and all movies with another, just to use a simple example. As another example, each of certain popular programs could be assigned its own, unique code. Such a code could be used for billing purposes and, in addition, to statistically monitor the viewership of each one. As is well known, audience monitoring is important because it provides measurements about how many people watch a particular program. This data is used to arrange the programming schedule, set advertising rates for commercials shown on that program, and so on. Thus, the invention makes it possible to use the billing code for the dual purpose of audience monitoring, as explained below.

Fig. 3 shows details of premium service counter 29 arranged to identify codes assigned to specific programs. Output 23 from code receiver 21 is inputted to program ID circuit 41. Circuit 41 compares that signal with the codes stored in program codes memory 43 which, by way of example, has several codes for different programs stored therein. If a match is found with a particular program code, circuit 41 generates a signal on whichever one of its outputs is connected to the counter that is pre-designated for that program. Each code in memory 43 is associated by circuit 41 with one of counters 30A, 30B and 30C. Thus, when a match is found by circuit 41 for the code of program #1, circuit 41 generates a signal on output 41A in order to increment the count in the counter for program #1 by one.

The program codes stored in memory 43 are also stored in memory 25. Thus, one variation of the arrangement shown in Fig. 3 is to eliminate memory 43 and to have program ID circuit 41 access the data in memory 25.

Returning now to Fig. 2, it will be understood that the output 30 can represent a single count on one output or, in another embodiment (as shown in Fig. 3), several counts on multiple outputs. Both embodiments will be referred to in the ensuing discussion in the singular, as output 30, for the sake of brevity and convenience.

Output 28 of basic service counter 27 and output 30 of premium service counter 28 are inputted to billing calculation circuit 31. Circuit 31 receives the output of billing rates memory 33, and also the output 17B of memory 17 (for audience monitoring, as explained below).

Circuit 31 includes a multiplication circuit for multiplying an inputted count by a billing rate stored in memory 33. As explained above, each count stored in counters 27 and 29 represents a period of time. The total stored in a counter represents the total viewing time. The billing rate stored in memory 33 represents a fee or charge for the same period of time represented by each count. By multiplying that rate by the total in a counter, circuit 31 derives a billing amount for the total viewing time.

Circuit 31 associates the total count in counters 28 and 30 with the rates in memory 33. Thus, the rate stored in memory 33 for basic service is multiplied by the total in counter 27. Likewise, returning to the exemplary embodiment of Fig. 3, the rate for viewing Program #1 is multiplied by the total in the counter for Program #1, and so on.

Circuit 31 also receives the signal on output line 17B of memory 17 (see Fig. 2). The data on output 17B, the retrieval of which can be triggered by circuit 31 via a signal (not shown) provided to input 17A, includes the detected codes and the time associated with each. This is all combined in circuit 31 so it can be provided to billing output device 35, as explained below.

Billing output device 35 is, for example, a printer that lists the details for which the pay TV customer is being billed. This information can include the total viewing time for basic service and premium service, the specific programs viewed, the date and time of day, the billing rates applied, the total for each type of service, and the total due for the billing period. This provides the viewer with a validation capability to determine whether or not the bill is correct, much like a phone bill is arranged to, for example, list long distance calls.

Numerous different use-based variations are available for billing a customer. Some examples are as follows:
Basic service A - pay a flat monthly subscription fee (No basic service code is required).
Basic service B - a rate is applied to the viewing time. (One basic service code in code signal 4 is required).
Premium service A - same rate is used based on viewing any program on any premium channel. (Only one premium service code in code signal 4 is required.)
Premium service B - premium channels are divided into different billing levels, with each level having its own rate. ( Several premium service codes are required along with the Fig. 3 embodiment).
Premium service C - certain programs are each assigned a specific rate different from the rate for other premium services and, also, different from each other. (Several premium service codes are required along with the Fig. 3 embodiment).

These variations can, in turn, be combined into various billing options which include the following:

### Option No. 1:

### Basic service A

### Premium service A

The main advantage of this option is its simplicity. Since the basic service is what most viewers want to watch and regard as a necessity, they may be unwilling to have a use-based fee applied which they would have to keep track of so as not to incur high bills (such as for keeping the TV on 'round the clock. The pay TV service provider would also have its system "clogged" by the sheer volume of this basic service data. It can avoid having to transmit a basic service code, to collect the viewing data, and to process the use-based billing information by charging a flat fee for this basic service. However, a use-based rate is applied for premium channels. This has the advantage of providing the customer with easy and convenient access to such premium service, if and when a program of interest is shown, without having to incur the higher cost of a monthly fee. For the pay TV service provider this provides access to revenue which it otherwise wouldn't have from non-monthly subscribers. Also, this single rate for premium service makes it relatively simple to transmit, process and bill the premium service codes.

### Option No. 2:

### Basic service B

### Premium service A

This provides a use-based pay TV for both basic and premium services.

### Option No. 3:

### Basic service B

### Premium service B

This enables the pay TV service provider to make it more attractive for its customers to view most premium channels by applying a relatively low rate, while giving it the flexibility of applying a relatively higher rate for the most popular premium channels.

### Option No. 4:

### Basic service B

### Premium service B and C

This option gives the pay TV service provider an enhanced degree of flexibility to charge viewers not only on the basis of a premium channel, but based on a premium program. Thus, the pay TV service provider can choose to apply different rates for viewing different premium channels, or not. However, regardless of which billing approach it applies for premium service B, it can bill certain programs at higher (or perhaps lower) rates than the rate applied to that premium channel.

Thus, as explained above, the invention enables the pay TV service provider to bill its customers on a use-based calculation rather than a flat fee, with attendant advantages to itself and to its customers. In addition, the use of codes and the resultant availability of use-based information makes it possible for the pay TV service provider to also provide use-based discounts to its customers. Such discounts can take many forms, both for basic and for premium service. Such discounts can serve as a viewing incentive for customers to use more of the pay TV service than they might have done otherwise. For example, a discount of 5% can be applied to the entire bill when total viewing time exceeds a specified minimum. Also, the discount can be applied only if the total viewing time exceeds a specified premium service minimum viewing time. Furthermore, rather than applying such a discount, the pay TV service provider could offer the possibility of viewing certain premium programs or channels "for free" after the minimum is exceeded. Other incentives will readily occur to anyone with ordinary skill in the art.

Another advantage inherent in using this code-based invention is the ability to monitor what channels and/or programs are being watched by the public, as mentioned above. The output of billing calculation circuit can be used for this purpose. It includes all the required information which was retrieved from memory 17 and processed to identify the program, either from its uniquely assigned code or by combining the channel code with the time information from clock 34. It is also possible to determine what part of the program was watched and what part skipped (e.g. a commercial). For example, such data can be useful to determine how effective the program was in holding the viewer's interest, and commercial "zapping" can also be detected. Of course, this function need not be performed by circuit 31 but, rather, a separate, specialized circuitry can be provided for this purpose.

Apparatus 3 is a conventional part of a commercially available video and/or audio instrument, such as a TV set. It is advantageous to have at least part of the remainder of the circuitry depicted in Figs. 1, 2 and 3, and described above in accordance with the invention, included as part of the electronics used for the video and/or audio for the TV set. The technology of today uses integrated circuits to provide these functions. The circuits of the invention would be designed into the integrated circuits for all such TVs. For example, the electronics could be fabricated on the semiconductor chip developed to control operation of the TV and the viewing of programs on it. Such TV chips are becoming increasingly sophisticated with modern TVs being provided with added functionality approaching that of a computer.

Several advantages result from adopting the approach of the present invention incorporating the electronics into the integrated circuit that controls the TV. The cost of implementing this invention is substantially reduced by eliminating the necessity to have a customized circuit, such as in a special "box", installed in only subscribing households. The "boxes" have to be designed, built, stored, shipped, installed, maintained and updated, and also recovered if and when a subscriber terminates the service. However, once the circuit is initially designed and then becomes a standard component of every TV, the added manufacturing cost involved is negligible, and no storage, shipment, installation, upgrading, wiring, etc. are required. The cost of adding such circuitry to a TV chip is minimal considering the large number of chips over which the cost would be spread. Also, in the case of "boxes", descramblers are widely available to circumvent them. However, if a code detection circuit is embedded into an integrated circuit, it is virtually impossible to circumvent it and avoid getting billed for a use-based service.

Although specific embodiments of the present invention have been described in detail above, various modifications thereof will readily occur to anyone with ordinary skill in the art. For example, at least some of the various memories 16, 24, 25, 33 and 43 could be constituted as a single memory. Also, although the advantages of embedding the circuitry of the invention in the integrated circuit of a TV are clear, as explained above, this need not apply to all of the circuitry shown in Figs. 1, 2 and 3. Only circuits 15, 16, 17 and 18 would be embedded in the integrated circuit of the TV. At least part of the remaining circuitry would be located at a central station. Signals 19 from each of the pay TV customers would be received at the central station and processed to calculate the billed amount and to actually output the bills. Data could be inputted to memories 16, 24, 25, 33 and 43 on a one time basis, at the factory, or such data would be inputted in any one of various ways, if and when needed. The billing output device 35 could be a signal output device rather than a printer. The signal from billing output device 35 could be transmitted as a radio or Internet signal rather than being printed and mailed. Alternatively, a phone connection could be used. It should also be understood and appreciated that it is not essential to rely on both premium channel codes and premium program codes. Only one of these codes is needed. Thus, if only premium channel codes are used, they would be combined with a time stamp, such as from timer 34, to enable associating a particular channel code with the particular program broadcast on that channel at that particular time. Furthermore, although the duration of time during which the viewer is tuned to pay TV services is disclosed above as being determined from the number of detected codes that are counted, other ways can be used as well for this purpose. For example, a special timing signal can be encoded with the programming signal. Also, the channel to which the viewer is tuned, and the duration of viewing it, can be determined with a circuit within or coupled to the TV tuner rather than by reliance on the encoded programming signal. These and other such modifications are all intended to fall within the scope of the present invention as defined by the following claims.

## Claims

1. Arrangement for billing viewers for viewing programs offered by pay TV, comprising:
means (9) at a viewer location for detecting, as a result of the viewer being tuned to a selected program, a programming signal encoded with a code signal associated with pay TV programs;
means (15) for decoding said encoded programming signal to derive the code signal therefrom;
means (34) for determining a duration of time during which the viewer was tuned to programs offered by pay TV; and
means (31 ) for combining said determined duration of time with a designated billing rate corresponding to said decoded code signal to derive a use-based billed amount.

2. Arrangement according claim 1, comprising:
means (6)for encoding a programming signal, to be broadcast by a pay TV program signal source, with a code signal and
means (7) for broadcasting said encoded programming signal.

3. Arrangement according claim 1, wherein said code signal includes a code that identifies only all programs available for basic pay TV service.

4. Arrangement according claim 1, wherein said code signal includes a code that identifies only all programs available for premium pay TV service.

5. Arrangement according claim 1, wherein said code signal includes codes that uniquely identify, respectively, specific programs available for pay TV service.

6. Arrangement according claim 1, wherein said code signal includes codes that uniquely identify, respectively, all programs available for basic pay TV service and all programs available for premium pay TV service.

7. Arrangement according claim 1, wherein said code signal includes codes that uniquely identify, respectively, all programs available for basic pay TV service, all programs available for at least one category of premium pay TV service, and specific programs available for pay TV service.

8. Arrangement according claim 1, wherein said code signal is transmitted as part of said encoded programming signal at fixed, designated time intervals.

9. Arrangement according claim 8, wherein said determining means (34) comprises a counter for counting occurrences of said decoded code signal to determine said duration of time therefrom.

10. Arrangement according claim 1, wherein said combining means (31 ) applies different preset billing rates corresponding, respectively, to the codes in said decoded code signal.

11. Arrangement according claim 10, wherein said different preset billing rates correspond, respectively, to basic pay TV service and premium pay TV service.

12. Arrangement according claim 10, wherein said different preset billing rates correspond, respectively, to different specific programs.

13. Arrangement according claim 1, wherein said determining means (34) determines said duration of time from said decoded code signal.

14. A method for providing audience monitoring information, comprising:
encoding a programming signal, to be broadcast by a pay TV program signal source, with a code signal;
broadcasting said encoded programming signal;
detecting, at a viewer location, said encoded programming signal as a result of the viewer being tuned to a program offered by the pay TV service;
decoding said encoded programming signal to derive the code signal therefrom; determining a duration of time during which the viewer was tuned to programs offered by the pay TV service; and
combining said determined duration of time with a designated billing rate corresponding to said decoded code signal to derive a use-based billed amount for the pay TV service.

15. The method claim 14, wherein said code signal includes a code that identifies only all programs available for basic pay TV service.

16. The method of claim 15, wherein said code signal includes a code that identifies only all programs available for premium pay TV service.

17. The method of claim 16, wherein said code signal includes codes that uniquely identify, respectively, specific programs available for pay TV service.

18. The method of claim 14, wherein said code signal includes codes that uniquely identify, respectively, all programs available for basic pay TV service and all programs available for premium pay TV service.

19. The method of claim 14, wherein said code signal includes codes that uniquely identify, respectively, all programs available for basic pay TV service, all programs available for at least one category of premium pay TV service, and specific programs available for pay TV service.

20. The method of claim 14, wherein said code signal is transmitted as part of said encoded programming signal at fixed, designated time intervals.

21. The method of claim 20, wherein said determining step comprises counting occurrences of said decoded code signal to determine said duration of time therefrom.

22. The method of claim 14, wherein said combining step applies different preset billing rates corresponding, respectively, to the codes in said decoded code signal.

23. The method of claim 22, wherein said different preset billing rates correspond, respectively, to basic pay TV service and premium pay TV service.

24. The method of claim 22, wherein said different preset billing rates correspond, respectively, to different specific programs.

25. The method of claim 14, wherein said determining step determines said duration of time from said decoded code signal.

26. The method according to one of the claims 14 to 25 wherein said code signal comprising at least one code respectively associate with programs and comprising:
determining from the at least one code in the decoded code signal the pay TV programs to which the viewer was tuned.

27. The according to one of claims 14 to 26, comprising:
providing a use-based discount to the viewer for pay TV services.

28. The method of claim 27, wherein the use-based discount comprises a discount of a given percentage applied to the entire bill when total viewing time related to pay TV services exceeds a specified minimum.

29. The method of claim 27, wherein the use-based discount comprises a discount of a given percentage applied to the entire bill when total viewing time related to premium pay TV services exceeds a specified minimum.

30. The method of claim 27, wherein the use-based discount comprises free viewing of viewing certain premium programs or channels after a specified minimum total viewing time related to pay TV services is exceeded.

31. The method of claim 27, wherein said determining step determines said duration of time from said decoded code signal.

32. The method according to one of the claims 14 to 31 wherein said code signal comprising at least one code respectively associated with a program signal source and comprising:
determining from the at least one code in the decoded code signal the pay TV program signal source to which the viewer was tuned.

33. The method according to one of the claims 26 to 32 comprising:
determining a duration of time during which the viewer was tuned to programs offered by pay TV; and
combining said determined duration of time with a designated billing rate corresponding to said decoded code signal to derive a use-based billed amount.

34. Apparatus use of an arrangement according to one of the claims 1 to 13, comprising:
means for providing a use-based discount to the viewer for pay TV services.

35. The use of claim 34, wherein the use-based discount comprises a discount of a given percentage applied to the entire bill when total viewing time related to pay TV services exceeds a specified minimum.

36. The use of claim 34, wherein the use-based discount comprises a discount of a given percentage applied to the entire bill when total viewing time related to premium pay TV services exceeds a specified minimum.

37. The use of claim 34, wherein the use-based discount comprises free viewing of viewing certain premium programs or channels after a specified minimum total viewing time related to pay TV services is exceeded.

38. The use of claim 34, wherein said determining means determines said duration of time from said decoded code signal.
